(19) Europäisches Patentamt
European Patent Office
Office européen des brevets

(11) EP 2 028 520 A2

(12) **EUROPÄISCHE PATENTANMELDUNG**

(43) Veröffentlichungstag:
25.02.2009 Patentblatt 2009/09

(51) Int Cl.:
*G02B 23/00* (2006.01)          *G02B 27/00* (2006.01)

(21) Anmeldenummer: 08162313.4

(22) Anmeldetag: **13.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **17.08.2007   DE 102007038946
17.09.2007   DE 102007044228**

(71) Anmelder: **Carl Zeiss Surgical GmbH
73447 Oberkochen (DE)**

(72) Erfinder: **Sesselberg, Markus
73431, Aalen (DE)**

(74) Vertreter: **Müller & Schubert
Patentanwälte
Innere Wiener Straße 13
81667 München (DE)**

(54) **Optische Einrichtung**

(57)      Es wird eine optische Einrichtung (10) beschrieben, mit wenigstens einem Objektivelement (20), das zwei oder mehr Objektiv-Linsenelemente (21, 24, 27) aufweist, wobei eines der Objektiv-Linsenelemente (21) als Trägerlinsenelement für ein diffraktives optisches Element (15) ausgebildet ist, welches ein diffraktives optisches Element (15) aufweist. Um eine optische Einrichtung (10) zu schaffen, mit der eine besonders gute Korrektur der chromatischen Vergrößerungsdifferenz erreicht werden kann, ist vorgesehen, dass die optische Einrichtung (10) als Galilei-System oder als Kepler-System ausgebildet ist, dass die optische Einrichtung (10) ein Okularelement (30) mit wenigstens einem Okular-Linsenelement (31) aufweist, dass das diffraktive optische Element (15) derart in der optischen Einrichtung (10) angeordnet oder ausgebildet ist, dass die Lichtstrahlen in einem Winkel von kleiner 20 Grad auf dieses einfallen und dass das diffraktive optische Element (15) eine minimale Furchenbreite h von größer 50 $\mu$m, insbesondere von größer 100 $\mu$m, aufweist.

Fig.1

EP 2 028 520 A2

**Beschreibung**

Die vorliegende Erfindung betrifft eine optische Einrichtung, insbesondere eine Teleskopeinrichtung, mit wenigstens einem Objektivelement, wobei das Objektivelement zwei oder mehr Objektiv-Linsenelemente aufweist.

Bei einer derartigen optischen Einrichtung kann es sich beispielsweise um ein so genanntes Galilei-System handeln.

Galilei-Systeme sind beispielsweise zum Bau kurzer Teleskope geeignet. Blickt das Auge durch ein solches Galilei-Teleskop, so sieht es ein aufrechtes und seitenrichtiges Bild. Die Anordnung zweier Galilei-Teleskope für beide Augen ist dabei die Regel. Werden solche Galilei-Teleskope als Fernglas verwendet, wie beispielsweise bei einem Theaterglas oder dergleichen, so liegt die Objektebene im Unendlichen oder zumindest weit von der Frontlinse entfernt (typischerweise mehr als 10 Meter). In diesem Fall spricht man von einem "Galilei-Fernglas". Es kann aber auch wünschenswert sein, die Objektebene dichter an die Frontlinse des Galilei-Teleskops heranzulegen, so dass der Abstand beispielsweise zwischen 20 cm und 100 cm beträgt. Man erhält damit eine Art Lupe mit einem großen Objektabstand. In diesem Fall spricht man von einer "Galilei-Lupe", etwa einer "Galilei-Lupenbrille". Galilei-Lupenbrillen werden häufig von sehbehinderten Menschen als Lupenbrille verwendet. Galilei-Lupenbrillen werden aber auch professionell eingesetzt, beispielsweise von Zahnärzten, Zahnarzthelfern, Feinmechanikern, Juwelieren und dergleichen.

Ein Galilei-System besteht im Allgemeinen aus einem Objektivelement, mit positiver Brechkraft, sowie einem Okularelement, mit negativer Brechkraft. Dabei kann sowohl das Objektiv als auch das Okular aus einem oder mehreren Linsenelementen bestehen. Der Durchmesser des Objektivs ist vorteilhaft größer, bevorzugt deutlich größer, als der Durchmesser des Okulars, so dass das Gewicht der Objektivlinsen deutlich größer ist als das Gewicht der Okularlinsen.

Damit Galilei-Systeme, beispielsweise Galilei-Teleskope, bequem genutzt werden können, kommt es auf ein geringes Gewicht, eine geringe Baulänge und ein nicht zu kleines Sehfeld an. Gewicht und Baulänge spielen insbesondere bei Lupenbrillen eine sehr große Rolle, da diese meist am Kopf getragen und dazu oftmals auf einer Art Brillengestell montiert werden.

Schon seit langer Zeit werden immer wieder neue Varianten von Galilei-Teleskopen entwickelt. Ein wichtiger Design-Parameter eines Galilei-Teleskops ist die Vergrößerung. Als Faustregel kann angenommen werden, dass die Anzahl der Linsen in einem Galilei-Teleskop mit der Vergrößerung zunimmt. So wird in dem US-Patent 5,463,500 B beispielsweise ein Galilei-System mit drei Linsen vorgeschlagen. In dem US-Patent 5,790,323 wird ein Galilei-System mit höherer Vergrößerung vorstellt, welches bereits fünf Linsen enthält.

In der DE 10 2005 036 486 A1 ist ein optisches Gerät beschrieben, mit dem eine erhöhte Schärfentiefe erreicht werden soll. Dazu ist eine Einrichtung zum Erhöhen der Schärfentiefe vorgesehen, bei der es sich beispielsweise um ein diffraktives optisches Element handeln kann. Diese Einrichtung zur Schärfentiefe ist zwischen einem Objektivelement und einem Okularelement angeordnet. Das bei dieser bekannten Lösung eingesetzte diffraktive optische Element wird für einen ganz bestimmten Zweck eingesetzt. Es geht hierbei nicht um die Korrektion chromatischer Abbildungsfehler, sondern um die Erzeugung eines optischen Elements mit mehreren Brennpunkten. Dies geht prinzipiell mit einem diffraktiven optischen Element, weil mit einem solchen Element das Licht gleichzeitig in verschiedene Beugungsordnungen gebeugt werden kann, was zu den verschiedenen Brennpunkten führt.

Im Fall einer Galilei-Lupenbrille ist dieser Effekt jedoch unerwünscht. Dort, ebenso wie in einem Galilei-Fernglas, ist ein wichtiges Qualitätsmerkmal die Korrektur der chromatischen Vergrößerungsdifferenz. Hierbei handelt es sich im Allgemeinen um Abbildungsfehler, die durch die Wellenlängenabhängigkeit der Brechzahl entstehen. Da Galilei-Ferngläser und -Lupen üblicherweise im visuellen Spektrum eingesetzt werden, handelt es sich hierbei um breitbandige optische Systeme. Ist die chromatische Vergrößerungsdifferenz nicht gut korrigiert, so treten Farbsäume auf, die dann störend wahrgenommen werden. Dies rührt daher, dass zu jeder Wellenlänge in der Regel ein etwas anderer Abbildungsmaßstab gehört, so dass die entstehenden Bilder auf einem Detektor je nach Farbe eine etwas unterschiedliche Größe haben. Diesen Effekt nimmt man als Farbränder wahr. Solche Farbränder sind sehr störend und fallen einem Nutzer sehr schnell auf. Insbesondere bei professionellen Anwendungen von Galilei-Systemen sind solche Farbränder zu vermeiden.

In der DE 298 23 076 U1 ist ein optisches System für eine Fernrohr- oder Lupenbrille beschrieben, wobei das optische System eine einstückige Objektivlinse aufweist. Dabei weist die einer Okularlinse zugewandte Oberfläche der Objektivlinse eine diffraktive Struktur auf. Dadurch wird es bereits möglich, die chromatische Vergrößerungsdifferenz in begrenztem Umfang zu korrigieren.

Ausgehend vom genannten Stand der Technik liegt der vorliegenden Erfindung die Aufgabe zugrunde, eine optische Einrichtung der eingangs genannten Art derart weiterzubilden, dass die zum Stand der Technik beschriebenen Nachteile vermieden werden können. Insbesondere soll solch eine optische Einrichtung geschaffen werden, mit der die Korrektur der chromatischen Vergrößerungsdifferenz im Hinblick auf die in der DE 298 23 076 U1 beschriebene Lösung weiter verbessert werden kann.

Diese Aufgabe wird erfindungsgemäß gelöst durch die optische Einrichtung mit den Merkmalen gemäß dem unabhängigen Patentanspruch 1. Eine besondere Verwendung einer derartigen optischen Einrichtung wird im unabhängigen Patentanspruch 12 angegeben. Weitere Merkmale und Details der Erfindung ergeben sich aus den Unteransprüchen, der Beschreibung sowie den Zeichnungen.

Erfindungsgemäß wird eine optische Einrichtung, insbesondere eine Teleskopeinrichtung, bereitgestellt, mit wenigstens einem Objektivelement, das zwei oder mehr Objektiv-Linsenelemente aufweist, wobei eines der Objektiv-Linsenelemente als Trägerlinsenelement für ein diffraktives optisches Element ausgebildet ist, welches ein diffraktives optisches Element aufweist. Die optische Einrichtung ist dadurch gekennzeichnet, dass sie als Galilei-System oder als Kepler-System ausgebildet ist, dass sie ein Okularelement mit wenigstens einem Okular-Linsenelement aufweist, dass das diffraktive optische Element derart in der optischen Einrichtung angeordnet oder ausgebildet ist, dass die Lichtstrahlen in einem Winkel von kleiner 20 Grad auf dieses einfallen und dass das diffraktive optische Element eine minimale Furchenbreite h von größer 50 $\mu$m, insbesondere von größer 100 $\mu$m, aufweist.

In ihrer allgemeinen Ausgestaltung wird auch eine optische Einrichtung, insbesondere eine Teleskopeinrichtung, bereitgestellt, mit wenigstens einem Objektivelement, das zwei oder mehr Objektiv-Linsenelemente aufweist. Die optische Einrichtung ist dadurch gekennzeichnet, dass eines der Objektiv-Linsenelemente als Trägerlinsenelement für ein diffraktives optisches Element ausgebildet ist, welches ein diffraktives optisches Element aufweist.

Die vorliegende Erfindung ist grundsätzlich nicht auf bestimmte Typen von optischen Einrichtungen oder Funktionalitäten von optischen Einrichtungen beschränkt. Insbesondere soll es sich jedoch um eine Teleskopeinrichtung handeln, wobei die Erfindung auch diesbezüglich nicht auf bestimmte Teleskoptypen beschränkt ist. Einige vorteilhafte, jedoch nicht ausschließliche Beispiele für optische Einrichtungen werden im weiteren Verlauf der Beschreibung näher erläutert.

Vorteilhaft kann die optische Einrichtung als Einrichtung vom Galilei-Typ, das heißt als Galilei-System, ausgebildet sein. Galilei-Systeme bestehen grundsätzlich aus einem Objektivelement mit positiver Brechkraft und einem Okularelement mit negativer Brechkraft. Dabei kann sowohl das Objektiv als auch das Okular aus einer oder mehreren Linsen bestehen. Der Durchmesser des Objektivs ist in der Regel deutlich größer als der Durchmesser des Okulars. Galilei-Systeme an sich sind bereits seit langem bekannt und den auf diesem Gebiet tätigen Fachleuten geläufig.

In weiterer Ausgestaltung kann auch vorgesehen sein, dass die optische Einrichtung als Kepler-System ausgebildet ist. Kepler-Systeme sind in der Regel Teleskope in Form von Linsenteleskopen, die ein sammelndes Linsenobjektiv und ein sammelndes Linsenokular aufweisen. Kepler-Systeme an sich sind bereits seit langem bekannt und den auf diesem Gebiet tätigen Fachleuten geläufig. Sie werden häufig als astronomische Teleskope eingesetzt. Mit einer geeigneten Vorrichtung zur Bildumkehr, beispielsweise mit entsprechenden Prismen, finden Kepler-Systeme aber auch Verwendung als terrestrische Ferngläser.

In weiterer Ausgestaltung kann vorgesehen sein, dass die optische Einrichtung ein Okularelement aufweist. Dieses Okularelement wiederum weist wenigstens ein Okular-Linsenelement auf. Dabei ist die Erfindung weder auf eine bestimmte Anzahl, noch auf bestimmte Formen von Okular-Linsenelementen beschränkt. Im weiteren Verlauf werden einige vorteilhafte, jedoch nicht ausschließliche Beispiele geeigneter Okular-Linsenelemente beschrieben.

Die optische Einrichtung weist als ein grundlegendes Merkmal wenigstens ein Objektivelement auf. Das Objektivelement wiederum weist zwei oder mehr Objektiv-Linsenelemente auf. Dabei ist die Erfindung natürlich nicht auf eine bestimmte Anzahl von Objektiv-Linsenelementen beschränkt.

Eines der Objektiv-Linsenelemente ist als Trägerlinsenelement für ein diffraktives optisches Element ausgebildet. Dieses Trägerlinsenelement weist auch ein diffraktives optisches Element auf. "Aufweisen" heißt dabei, dass das diffraktive optische Element auf beziehungsweise am Trägerlinsenelement angeordnet ist. "Aufweisen" kann aber auch bedeuten, dass das diffraktive optische Element auf beziehungsweise am oder im Trägerlinsenelement ausgebildet ist. Natürlich sind diesbezüglich auch Kombinationen denkbar. Vorzugsweise weist das Trägerlinsenelement wenigstens eine Trägerfläche auf, auf/an der das diffraktive optische Element angeordnet, beziehungsweise auf/an/in der das diffraktive optische Element ausgebildet ist. Die Anordnung des diffraktiven optischen Elements, beziehungsweise dessen Ausbildung auf/am/im Trägerlinsenelement ergibt sich dabei nach dessen Ausgestaltung, so dass die Erfindung diesbezüglich, ebenso wie bezüglich der Ausgestaltung des diffraktiven optischen Elements, keinerlei Beschränkung unterworfen ist. Einige vorteilhafte, jedoch nicht ausschließliche Beispiele hierzu werden im weiteren Verlauf der Beschreibung näher erläutert.

Ein diffraktives optisches Element ist generell ein optisches Element, beispielsweise ein - gegebenenfalls komplexes - Muster aus Strukturen, beispielsweise aus Mikrostrukturen, welches Licht in definierter Weise modulieren und transformieren kann. Beispielsweise kann es sich bei einem diffraktiven optischen Element um eine mit Strukturen versehene optische Fläche handeln, die durch Lichtbeugung an diesen Strukturen optisch wirksame Funktionen realisiert.

Beispielsweise kann vorgesehen sein, dass die Trägerfläche für das diffraktive optische Element als Planfläche ausgebildet ist, so dass das diffraktive optische Element auf einer Planfläche liegt. Natürlich kann das diffraktive optische Element auch auf einer gekrümmten oder zumindest bereichsweise gekrümmten Fläche liegen.

Erfindungsgemäß weist das Objektivelement ein diffraktives optisches Element auf. Diffraktive optische Elemente haben die Eigenschaft, eine gewisse Lichtmenge immer auch in unerwünschte Beugungsordnungen abzulenken. Dies führt zu Doppelbildern oder zu einer Kontrastverringerung. Daher ist es vorteilhaft, in einem Optiksystem nur ein diffraktives optisches Element, nicht jedoch mehrere diffraktive optische Elemente einzusetzen. Eine Lösung mit mehreren diffraktiven Elementen ist daher als nachteilig anzusehen.

Das diffraktive optische Element, das bei der erfindungsgemäßen optischen Einrichtung zum Einsatz kommt, ist vorteilhaft in einer Weise ausgestaltet, dass möglichst alles Licht in die Nutzordnung gelenkt wird. Es soll möglichst wenig Licht in andere Beugungsordnungen gelenkt werden.

Vorteilhaft ist vorgesehen, dass das diffraktive optische Element derart in der optischen Einrichtung angeordnet oder ausgebildet ist, dass die Lichtstrahlen in einem Winkel von kleiner 20 Grad auf dieses einfallen. Bevorzugt fallen die Lichtstrahlen in einem Winkel von kleiner 10 Grad auf das diffraktive optische Element ein. Besonders bevorzugt fallen die Lichtstrahlen annähernd senkrecht auf das diffraktive optische Element ein. Vorteilhaft ist es, wenn die Lichtstrahlen möglichst senkrecht auf die Trägerfläche des diffraktiven optischen Elements einfallen. Je kleiner nämlich der Einfallswinkel auf die Trägerfläche des diffraktiven optischen Elements ist, umso weniger Falschlicht in unerwünschten Beugungsordnungen kann entstehen.

Vorzugsweise weist das diffraktive optische Element eine minimale Furchenbreite h von größer 50 $\mu$m, bevorzugt von größer 100 $\mu$m auf. Vorteilhaft ist es, wenn die minimale Furchenbreite h des diffraktiven optischen Elements nicht zu klein wird. Minimale Furchenbreiten h > 50 $\mu$m sind günstig, Furchenbreiten h > 100 $\mu$m sind bevorzugt. Je kleiner nämlich die minimale- Furchenbreite h ist, umso mehr Falschlicht in unerwünschten Beugungsordnungen entsteht, wenn die Flanken des diffraktiven optischen Elements nicht parallel zur optischen Achse der Linse verlaufen. Aufgrund von Fertigungsfehlern von diffraktiven optischen Elementen aus Kunststoff lenkt ein diffraktives optisches Element umso weniger Licht in unerwünschte Beugungsordnungen, je größer die Furchenbreite ist. Beispielsweise kann der Fall auftreten, dass die Furchenbreite zum Rand des diffraktiven optischen Elements hin abnimmt. In einem solchen Fall befinden sich die minimalen Furchenbreiten dann im Randbereich des diffraktiven optischen Elements.

Im einfachsten Fall weist das Objektivelement zwei Objektiv-Linsenelemente auf, wobei eines der Objektiv-Linsenelemente als Trägerlinsenelement für das diffraktive optische Element ausgebildet ist. Vorteilhaft kann jedoch auch vorgesehen sein, dass das Objektivelement zwei oder mehr Objektiv-Linsenelemente aufweist, wobei auch in diesem Fall eines der Objektiv-Linsenelemente als Trägerlinsenelement für das diffraktive optische Element ausgebildet ist. Vorzugsweise kann das Objektivelement drei Objektiv-Linsenelemente aufweisen.

Die einzelnen Objektiv-Linsenelemente können beispielsweise als Einzellinsen ausgebildet sein. Dann weist wenigstens eines der Objektiv-Linsenelemente ein diffraktives optisches Element auf. Es ist jedoch auch möglich, dass wenigstens eines der Objektiv-Linsenelemente als Kittglied ausgebildet ist, wobei das Kittglied aus wenigstens zwei Linsenelementen besteht. Ebenso sind Ausgestaltungen denkbar, bei denen die zwei oder mehr Objektiv-Linsenelemente des Objektivelements in Form eines einzigen Kittgliedes ausgebildet sind. In einem solchen Fall bilden dann die zwei oder mehr Objektiv-Linsenelemente die einzelnen Linsenelemente des Kittgliedes. Wenn das Objektivelement drei oder mehr Objektiv-Linsenelemente aufweist, kann vorgesehen sein, dass wenigstens zwei Objektiv-Linsenelemente als Kittglied ausgebildet sind, und dass wenigstens ein weiteres Objektiv-Linsenelement als Einzellinse ausgebildet ist.

Sofern wenigstens ein Objektiv-Linsenelement als Kittglied in der vorgenannten Form ausgebildet ist, kann wenigstens ein diffraktives optisches Element beispielsweise auf einer der Außenflächen des Kittgliedes ausgebildet/ angeordnet sein. In diesem Fall befindet sich das diffraktive optische Element auf/an einer der Oberflächen des Kittgliedes.

Alternativ oder zusätzlich kann auch vorgesehen sein, dass wenigstens ein diffraktives optisches Element auf einer der innerhalb des Kittgliedes vorgesehenen Linsenflächen ausgebildet/angeordnet ist. In diesem Fall befindet sich das diffraktive optische Element auf/an einer der Linseninnenflächen des Kittgliedes, es ist somit im Kittglied "vergraben". Derartige diffraktive optische Elemente sind beispielsweise in der US 5,734,502 oder der EP 0 965864 A2 beschrieben, deren Offenbarungsgehalt insoweit in die Beschreibung der vorliegenden Erfindung mit einbezogen wird.

Gemäß der vorliegenden Erfindung wird eine optische Einrichtung bereitgestellt, die unter anderem folgende Vorteile aufweist: Bei geeigneter Auswahl der Linsenelemente, die, wie weiter unten noch näher beschrieben wird, vorteilhaft zumindest teilweise aus Kunststoff bestehen können, kann eine optische Einrichtung mit geringem Gewicht realisiert werden. Dies ist beispielsweise dann von Vorteil, wenn die optische Einrichtung am Kopf getragen wird. Weiterhin kann die optische Einrichtung auch kostengünstig hergestellt werden, insbesondere dann, wenn Kunststoffkomponenten verwendet werden. Derartige Kunststoffkomponenten lassen sich kostengünstig herstellen, beispielsweise mittels eines Spritzgussverfahrens.

Schließlich kann durch die optische Einrichtung ein guter Korrektionszustand - insbesondere bei geringer Linsenzahl - erreicht werden. Dies wird dadurch erreicht, weil das Objektivelement zusätzlich zu dem Objektiv-Linsenelement mit dem diffraktiven optischen Element - wie ein solches bereits in der oben genannten DE 298 23 076 U1 offenbart ist - wenigstens noch ein weiteres Objektiv-Linsenelement aufweist. Dadurch kann insbesondere die Korrektur der chromatischen Vergrößerungsdifferenz weiter verbessert werden. Besonders bevorzugt ist, wenn das Objektivelement drei Objektiv-Linsenelemente aufweist. Allerdings ist die Erfindung nicht auf eine bestimmte Anzahl und Ausgestaltung der Objektiv-Linsenelemente beschränkt. Einige vorteilhafte, jedoch nicht ausschließliche Ausführungsbeispiele werden im weiteren Verlauf der Beschreibung näher erläutert.

Vorteilhaft kann wenigstens ein Objektiv-Linsenelement, welches nicht als Trägerlinsenelement für das diffraktive optische Element ausgebildet ist, als refraktives Linsenelement ausgebildet sein. Ein Linsenelement beziehungsweise eine Linsenfläche arbeitet dann refraktiv, wenn die Abbildung der Lichtstrahlen ausschließlich auf dem Brechungsgesetz beruht. Damit arbeitet ein diffraktives optisches Element nicht refraktiv. Üblicherweise sind "gewöhnliche" Sammel- oder Zerstreuungslinsen refraktiv arbeitende Linsen. Die Verwendung refraktiver Linsenelemente führt zu einer weiteren Verbesserung der Korrekturen, insbesondere zu einer weiter verbesserten Korrektur der chromatischen Vergrößerungsdifferenz, und zwar vorzugsweise bei geringer Linsenanzahl. Vorteilhaft kann vorgesehen sein, dass im Objektivelement der optischen Einrichtung ein Linsenelement (das Trägerlinsenelement) mit einem diffraktiven optischen Element verwendet wird, und dass alle anderen optischen Elemente des Objektivelements - gegebenenfalls auch eines weiter unten noch näher erläuterten Okularelements - refraktiv sind.

Vorzugsweise ist vorgesehen, dass wenigstens eine Linsenfläche wenigstens eines Objektiv-Linsenelements als asphärische Fläche ausgebildet ist. Dabei kann die Lage der Asphäre grundsätzlich überall im Objektivelement sein. Beispielsweise kann es sich bei der Asphäre um eine Folgefläche zu der Linsenfläche mit dem diffraktiven optischen Element handeln. Es ist natürlich auch denkbar, dass die Trägerfläche des diffraktiven optischen Elements selbst eine Asphäre ist. Es können auch zwei oder mehr Asphären vorgesehen sein und eingesetzt werden.

In weiterer Ausgestaltung ist vorteilhaft vorgesehen, dass das als Trägerlinsenelement für das diffraktive optische Element ausgebildete Objektiv-Linsenelement und/oder wenigstens ein nicht als Trägerlinsenelement für das diffraktive optische Element ausgebildetes Objektiv-Linsenelement aus Kunststoff gebildet ist/sind. Solche Linsenelemente, die nicht aus Kunststoff gebildet sind, können vorteilhaft aus Glas gebildet sein. Vorteilhaft ist vorgesehen, dass sowohl die Trägerlinse des diffraktiven optischen Elements als auch wenigstens ein weiteres Objektiv-Linsenelement aus Kunststoff bestehen. Je mehr Kunststofflinsen verwendet werden können, desto größer wird die erzielbare Gewichtsersparnis der optischen Einrichtung.

In einer vorteilhaften Ausführungsform kann vorgesehen sein, dass das Objektivelement aus zwei Kunststofflinsenelementen und einem Glaslinsenelement besteht. Ein optional vorgesehenes Okularelement der optischen Einrichtung kann aus Kunststoff oder Glas bestehen. Es ist jedoch möglich, durch Austauschen der Linsen die optische Einrichtung, beispielsweise eine Galilei-Lupenbrille, auf verschiedene Objektabstände zu adaptieren, wobei die Vergrößerung konstant gehalten wird. Somit können kostengünstig optische Einrichtungen für verschiedene Objektabstände hergestellt werden. Man kann zur Adaption auf einem gewünschten Objektabstand aber auch den Abstand zwischen objektiv und Okular variieren, so dass mit den Linsenelementen beispielsweise Galilei-Fernrohre mit verschiedenen Objektabständen gebaut werden können.

Die Erfindung ist nicht auf die Verwendung bestimmter Materialien für die Linsenelemente beschränkt. Einige vorteilhafte, jedoch nicht ausschließliche Beispiele geeigneter Materialien werden im Zusammenhang mit den Beispielen weiter unten angegeben.

Vorteilhaft kann vorgesehen sein, dass ein Glaslinsenelement im Objektivelement dahingehend abgeändert wird, dass die Glaslinse im Objektiv durch eine Kunststofflinse, beispielsweise aus dem Material Ultem des Herstellers GE Plastics, ersetzt wird. So wird eine weitere Gewichtsreduktion erreicht, denn die schwerste Glaslinse des Systems wird damit durch Kunststoff ersetzt. Die Ultem-Linse kann auch mit einer Zeonex-Linse verkittet werden, was weitere Vorteil darstellt, wie eine vereinfachte Fassungstechnik, gröbere Flächentoleranzen, weniger Beschichtungen, und dergleichen.

Wie weiter oben schon ausgeführt wurde, kann das diffraktive optische Element auf unterschiedliche Weise ausgestaltet sein, so dass die Erfindung diesbezüglich auf keine konkreten Ausgestaltungsformen beschränkt ist. Nachfolgend werden einige vorteilhafte, jedoch nicht ausschließliche Ausgestaltungen eines diffraktiven optischen Elements erläutert.

Beispielsweise kann ein diffraktives optisches Element aus einem Oberflächenrelief im Linsenmaterial an der Grenzfläche zu Luft bestehen, welches nach skalarer Theorie beispielsweise im Grünen bei $\lambda \approx 550$ nm die höchste Beugungseffizienz erreicht, während die Beugungseffizienz am blauen und roten Rand des Spektrums auf rund 80% abfällt. Daher verursacht jedes diffraktive optische Element Falschlicht aus unerwünschten Beugungsordnungen, welches zur Entstehung von Doppelbildern und zu einem Kontrastverlust führt. Daher ist die Verwendung von mehr als einem diffraktiven optischen Element kritisch.

Beispielsweise kann vorgesehen sein, dass das diffraktive optische Element als Ringsystem auf der Trägerfläche des Trägerlinsenelements angeordnet oder ausgebildet ist. Das Trägerlinsenelement kann dabei aus Kunststoff oder Glas bestehen. Ale Material für das Trägerlinsenelement kann beispielsweise ein Pressglas mit niedriger Glasübergangstemperatur Tg verwendet werden, so dass das Trägerlinsenelement samt diffraktivem optischem Element blankgepresst werden kann. Beispielsweise kann auch vorgesehen sein, dass das diffraktive optische Element als Kunststoff-Ringsystem auf der Oberfläche einer Glaslinse repliziert wird.

Vorteilhaft kann das diffraktive optische Element stufenförmig ausgebildet sein. Das bedeutet, dass das diffraktive optische Element in einem solchen Fall einen stufenförmigen Verlauf hat.

Das Objektivelement der optischen Einrichtung, beispielsweise einer Lupenbrille, kann daher neben dem dif-

fraktiven optischen Element zur Farbkorrektur auch noch eine Glas-Zerstreuungslinse aufweisen, die beispielsweise aus SNPH2 besteht und eine besonders niedrige Abbezahl $\eta_d$ = 18.9 aufweist, welche einen Teil der Farbkorrektur refraktiv bewerkstelligt. Das diffraktive optische Element hat dann vorzugsweise eine minimale Furchenbreite h von etwa 110$\mu$m. Diese minimale Furchenbreite h ist größer als bei den bisher bekannten Lösungen.

Vorzugsweise kann das diffraktive optische Element auf einer Trägerfläche des Trägerlinsenelements angeordnet oder ausgebildet sein, wobei die Trägerfläche aus einer sphärischen Grundform besteht. Vorteilhaft kann es sich dabei um eine so genannte Kinoform handeln, die aus einer sphärischen Grundform mit überlagertem diffraktivem optischem Element besteht. Natürlich ist auch denkbar, dass sich das diffraktive optische Element auf einer asphärischen Grundform befindet.

Vorteilhaft kann das diffraktive optische Element im Innern des Objektivelements angeordnet sein. Vorteilhaft ist es, wenn die diffraktive Fläche im Innern der optischen Einrichtung liegt, und nicht auf der Frontfläche. Der Grund hierfür besteht darin, dass sich Verschmutzungen nicht im diffraktiven optischen Element festsetzen können und das System somit leichter zu reinigen ist.

Beispielsweise kann wenigstens ein wie weiter oben erwähntes Okular-Linsenelement als Kittglied aus wenigstens zwei Linsenelementen gebildet sein. Die chromatische Vergrößerungsdifferenz lässt sich beispielsweise noch besser korrigieren, wenn die Okularlinse durch ein Kittglied aus zwei Glaslinsen ersetzt wird. Dieses Kittglied kann aber auch aus zwei verschiedenen Kunststoffen bestehen, beispielsweise Zeonex und Polycarbonat.

In weiterer Ausgestaltung kann wenigstens ein Okular-Linsenelement als Linsenelement mit veränderlicher Brennweite ausgebildet sein. Im Okular könnte beispielsweise eine variable Linse zum Einsatz kommen, deren Brennweite elektrisch, oder in anderer Weise, verändert werden kann, beispielsweise in Form einer Flüssiglinse oder dergleichen. Linsen mit variabler Brennweite an sich sind bereits seit einiger Zeit bekannt. Durch eine derartige Linse kann sowohl die individuelle Fehlsichtigkeit ausgeglichen werden als auch die Objektentfernung ohne mechanisch bewegte Teile einstellbar gemacht werden. Nimmt man eine Flüssiglinse, die eine Zylinderlinse darstellt, kann auch der Astigmatismus des Nutzers der vorgeschlagenen optischen Einrichtung, beispielsweise einer speziellen Brille, korrigiert werden. Auch kann das variable Linsenelement in Form einer variablen Zylinderlinse ausgebildet sein. Dann könnte beispielsweise ein Brillenträger mit Astigmatismus die optische Einrichtung, insbesondere wenn es sich hierbei um eine Lupenbrille handelt, gut nutzen.

Vorteilhaft kann eine optische Einrichtung gemäß der vorliegenden Erfindung, die beispielsweise als Galilei-System oder Kepler-System ausgebildet sein kann, als Lupeneinrichtung, oder Fernglaseinrichtung, oder Fernrohreinrichtung, oder Flüssiglinse mit einer torischen Fläche ausgebildet sein. Dabei ist die Erfindung natürlich nicht auf die genannten Ausgestaltungen beschränkt. Geeignete Anwendungen für Galilei-Teleskope sind beispielsweise preiswerte Nachtgläser (Galilei-Systeme haben eine große Austrittpupille), Galilei-System in Mikroskopen, beispielsweise Operationsmikroskopen, und dergleichen. Lupeneinrichtungen können beispielsweise in Form von Lupenbrillen realisiert werden, die beispielsweise von Zahnärzten, Zahnarzthelferinnen, Feinmechanikern und dergleichen eingesetzt werden können.

Vorteilhaft kann eine erfindungsgemäße optische Einrichtung als Lupeneinrichtung, insbesondere in einer Lupenbrille, oder als Fernglas, oder als Fernrohr, oder als Flüssiglinse mit einer torischen Fläche verwendet werden.

Eine optische Einrichtung gemäß der vorliegenden Erfindung kann vorteilhaft als Galilei-System oder Kepler-System mit diffraktivem optischem Element ausgebildet sein.

Bei diffraktiven optischen Elementen sinkt die skalare Beugungseffizienz für rotes und blaues Licht auf Werte von rund 80% ab, so dass an den Rändern des Spektrums Falschlicht aus unerwünschten Beugungsordnungen entsteht, welches zu einem Kontrastabfall oder zur Entstehung farbiger Doppelbilder führt. Verändert man den Aufbau des diffraktiven optischen Elements, und verwendet man dabei verschiedenartige, genau aufeinander abgestimmte Materialien, kann die Beugungseffizienz über das gesamte Wellenlängenband deutlich angehoben werden. Dieses Vorgehen ist beispielsweise in den Patenten US 5.734.502 oder EP 0 965 864 A2 beschrieben, deren Offenbarungsgehalt insoweit in die Beschreibung der vorliegenden Erfindung mit einbezogen wird.

Die Erfindung wird nun anhand einiger Beispiele unter Bezugnahme auf die beiliegenden Zeichnungen näher erläutert. Dabei zeigen

Figur 1      eine optische Einrichtung gemäß der vorliegenden Erfindung;

Figur 2      ein Ausführungsbeispiel für ein diffraktives optisches Element; und

Figur 3      verschiedene Strukturen anderer Ausführungsbeispiele für ein diffraktives optisches Element.

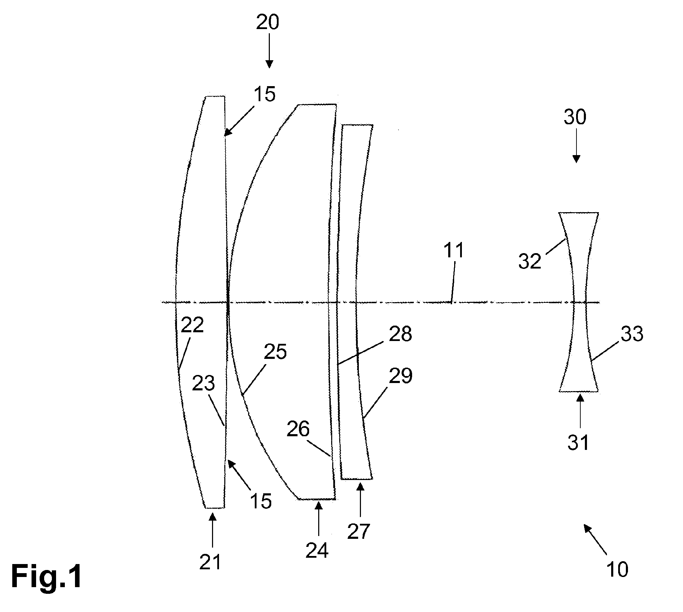

Die optische Einrichtung 10 gemäß Figur 1 ist in Form eines Galilei-Systems aufgebaut und besteht aus einem Objektivelement 20 und einem Okularelement 30, die entlang einer optischen Achse 11 angeordnet sind. Die optische Einrichtung 10 kann beispielsweise als Lupeneinrichtung ausgebildet, und als solche Bestandteil einer Lupenbrille sein.

Das Okularelement 30 besteht im dargestellten Beispiel aus einem Okular-Linsenelement 31, welches zwei Linsenflächen 32, 33 aufweist. Das Okular-Linsenelement 31 kann beispielsweise aus Glas gefertigt sein. Vorzugsweise wird dabei ein Glas mit möglichst kleiner Abbezahl verwendet, um chromatische Fehler zu minimieren. Das Okular-Linsenelement 31 könnte aber auch aus Kunststoff bestehen.

Das Objektivelement 20 besteht im dargestellten Beispiel aus drei Objektiv-Linsenelementen 21, 24, 27. Das Objektiv-Linsenelement 21 ist ein Trägerlinsenelement für ein diffraktives optisches Element 15, welches auf einer Trägerfläche 23 des Trägerlinsenelements 21 angeordnet oder ausgebildet ist. Im dargestellten Beispiel liegt das diffraktive optische Element 15 auf einer Fläche, die in das Innere des Objektivelements 20 gerichtet ist, und nicht auf dessen Frontfläche 22. Das Trägerlinsenelement 21 ist vorteilhaft aus Kunststoff gebildet. Es stellt im dargestellten Beispiel die Frontlinse des Objektivelements 20 dar.

Weiterhin weist das Objektivelement 20 zwei weitere Objektiv-Linsenelemente 24, 27 auf, die jeweils über Linsenflächen 25, 26 (Linsenelement 24) beziehungsweise 28, 29 (Linsenelement 27) verfügen. Wenigstens eines dieser Linsenelemente 24, 27 ist aus Kunststoff gefertigt. Das andere Linsenelement kann dann aus Glas hergestellt sein. Natürlich ist auch denkbar, dass alle Linsenelementen 21, 24, 27 des Objektivelements 20 aus Kunststoff bestehen.

In dem dargestellten Beispiel sind, von links gesehen, die ersten drei Linsen 21, 24, 27 mit den Linsenflächen 22, 23, 25, 26, 28, 29 das Objektiv 20, die Linse 31 mit den Linsenflächen 32 und 33 ist das Okular. Das Objekt befindet sich links von Linsenfläche 22, das Betrachterauge befindet sich rechts von Linsenfläche 33. Die Linsenfläche 23 ist die Trägerfläche des diffraktiven optischen Elements 15. Die Linsenfläche 25 ist eine asphärische Fläche. Das Linsenmaterial der ersten beiden Linsen 21, 24 von Linsenfläche 22 bis Linsenfläche 26 ist Kunststoff.

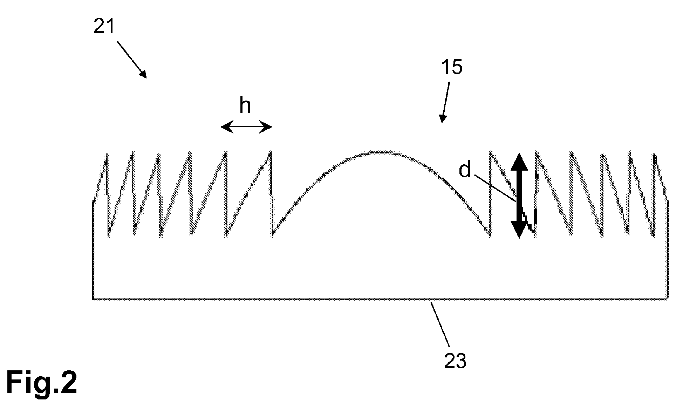

In Figur 2 ist ein Schnitt durch das Objektiv-Linsenelement 21, welches das Trägerlinsenelement für das diffraktive optische Element 15 darstellt, in größerem Detail dargestellt. Das diffraktive optische Element 15 ist auf der Linsenfläche 23 des Linsenelements 21 ausgebildet, so dass die Linsenfläche 23 die Trägerfläche für das diffraktive optische Element 15 darstellt. In Figur 2 ist zu beachten, dass das Aspektverhältnis so verändert wurde, dass das diffraktive optische Element 15 möglichst gut sichtbar ist. Tatsächlich ist typischerweise die Furchentiefe d deutlich kleiner als die Furchenbreite h. In der Figur 2 liegt das diffraktive optische Element 15 auf einer Planfläche. Natürlich kann das diffraktive optische Element 15 auch auf einer gekrümmten Fläche liegen. Die in Figur 2 dargestellte Struktur bezeichnet man auch als "Kinoform".

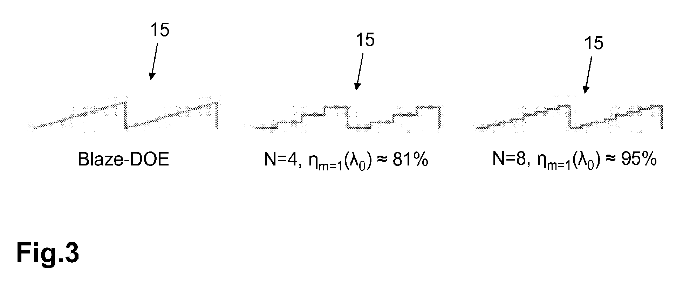

Natürlich kann die Struktur auch "binärisiert" werden. Dann bekommt man ein diffraktives optisches Element 15 mit einem stufenförmigen Verlauf. In Figur 3 sind diesbezüglich drei verschiedene Ausführungsformen dargestellt, wobei dort jeweils ein Stufenverlauf für jeweils zwei Ringe des diffraktiven optischen Elements 15 dargestellt ist.

Nachfolgend werden verschiedene Beispiele beschrieben, die auf der vorstehend beschriebenen optischen Einrichtung 10 basieren, wobei jeweils unterschiedliche Objektabstände gewählt worden sind.

Beispiel 1: Objektabstand 351 mm

In diesem Beispiel wird eine Galilei-Lupenbrille mit einem Objektabstand von 351 mm zwischen Objekt und Frontlinse 21 angegeben. Dabei ist das System so ausgelegt, dass das virtuelle Bild rund 1 m vor dem Betrachter zu liegen scheint. Ebenso könnte das virtuelle Bild aber auch im Unendlichen liegen. Die Figur zeigt den Linsenschnitt des erfindungsgemäßen Galilei-Teleskops, dessen Aufbau in Tabelle beschrieben 1 wird.

In der Tabelle 1, ebenso wie in den nachfolgenden Tabellen 2 und 3, entspricht jeweils die Flächennummer 1 der Linsenfläche 22, die Flächennummer 2 der Linsenfläche 23, die Flächennummer 3 der Linsenfläche 25, die Flächennummer 4 der Linsenfläche 26, die Flächennummer 5 der Linsenfläche 28, die Flächennummer 6 der Linsenfläche 29, die Flächennummer 7 der Linsenfläche 32 und die Flächennummer 8 der Linsenfläche 33.

Tabelle 1

| Nr. | Radius [mm] | Dicke bzw. Luftabstand [mm] | Glas bzw. Medium | Freier Durchmesser [mm] |
|---|---|---|---|---|
| 0 | | 351.0 | Luft | |
| 1 | 50.0 | 3.6 | Zeonex E48R | 28.5 |
| 2 | -453.490945 | 0.1 | Luft | 28.5 |
| 3 | Asphäre | 6.9 | Zeonex E48R | 27.3 |
| 4 | 190.322518 | 0.6 | Luft | 27.3 |
| 5 | 244.870247 | 1.3 | Ohara SNPH2 | 24.5 |
| 6 | 65.189864 | 15.371 | Luft | 24.5 |
| 7 | -18.916447 | 0.8 | Schott NPK52A | 12.4 |
| 8 | 22.196810 | | Luft | 12.4 |

Auf der Linsenfläche 23 (Flächennummer 2), die die Trägerfläche darstellt, des Trägerlinsenelements 21, das gleichzeitig auch die Frontlinse des Objektivelements 20 bildet, liegt das diffraktive optische Element 15. Es handelt sich dabei um eine so genannte Kinoform, die aus einer sphärischen Grundform mit einem überlagerten diffraktiven optischen Element besteht. Die z-Achse dieser Fläche zeigt vom Zeonex E48R weg. Die Fläche ist rotationssymmetrisch und kann damit durch eine Pfeilhöhe $z_{\text{ges}}(h)$ beschrieben werden, die sich aus einem sphärischen Anteil $z_{\text{sph}}(h)$ und einem Anteil $z_{\text{doe}}(h)$ des diffraktiven optischen Elements (DOE) zusammensetzt gemäß

$$z_{\text{ges}}(h) = z_{\text{sph}}(h) + z_{\text{doe}}(h) \quad \text{mit} \quad z_{\text{sph}} = \frac{h^2/R}{1 + \sqrt{1 - h^2/R^2}}$$

Der sphärische Anteil $z_{\text{sph}}(h)$ entspricht einer Sphäre mit Krümmungsradius von $R$ = - 453.490945 mm. Der DOE-Anteil $z_{\text{doe}}(h)$ berechnet sich aus den Gleichungen

$$z_{\text{doe}}(h) \;=\; -d \cdot n_{\text{doe}}(h) + d \cdot \text{INT}\big(n_{\text{doe}}(h)\big)$$

$$d \;=\; \frac{\lambda_0}{n(\lambda_0) - 1}$$

$$n_{\text{doe}}(h) \;=\; \frac{\varrho_{\text{doe}} h^2}{2} + c_1 \cdot h^4 + c_2 \cdot h^6 + c_3 \cdot h^8 + c_4 \cdot h^{10} \quad .$$

In der Galilei-Lupenbrille möchte man ein diffraktives optisches Element 15 (DOE) haben, bei welchem möglichst alles Licht in die Nutzordnung plus oder minus eins gelenkt wird. Es soll möglichst wenig Licht in andere Beugungsordnungen gelenkt werden. Deswegen ist die DOE-Tiefe d gemäß der vorstehenden Gleichung angegeben, woraus sich ergibt, dass möglichst viel Licht in die Nutzordnung mit Betrag eins gelenkt wird.

In den vorstehenden Gleichungen bezeichnet INT($x$) den ganzzahligen Anteil von x, zum Beispiel gilt INT( 5.8) =5. Die Konstanten haben die folgenden Werte:

$$\varrho_{\text{doe}} \;=\; 0.395218 \qquad \text{mm}^{-2}$$

$$c_1 \;=\; 0.25569131 \cdot 10^{-2} \ \text{mm}^{-4}$$

$$c_2 \;=\; -0.20661187 \cdot 10^{-4} \ \text{mm}^{-6}$$

$$c_3 \;=\; 0.69386672 \cdot 10^{-7} \ \text{mm}^{-8}$$

$$c_4 \;=\; -0.82035357 \cdot 10^{-10} \ \text{mm}^{-10}$$

$$\lambda_0 \;=\; 550 \qquad \text{nm}$$

$$n(\lambda_0) = 1.53202172$$

Die Furchenbreite des diffraktiven optischen Elements 15 nimmt zum Linsenrand hin ab und beträgt dort rund 110 $\mu$m. Die Linsenfläche 25 (Flächennummer 3) des Linsenelements 24 ist eine Asphäre, deren Pfeilhöhe $z_{asph}$ als Funktion des Radius h beschrieben werden kann gemäß

$$z_{\mathrm{asph}}(h) \;=\; \frac{\rho h^2}{1 + \sqrt{1 - \rho^2 h^2}} + c_1 \cdot h^4 + c_2 \cdot h^6 + c_3 \cdot h^8 + c_4 \cdot h^{10}$$

$$\rho \;=\; (22.43533\,\mathrm{mm})^{-1}$$

$$c_1 \;=\; 0.12463015 \cdot 10^{-6}\,\mathrm{mm}^{-3}$$

$$c_2 \;=\; 0.29057077 \cdot 10^{-7}\,\mathrm{mm}^{-5}$$

$$c_3 \;=\; -0.55128472 \cdot 10^{-10}\,\mathrm{mm}^{-7}$$

$$c_4 \;=\; 0.17274067 \cdot 10^{-12}\,\mathrm{mm}^{-9}$$

Nach der Figur umfasst das Objektiv 20 dieses Ausführungsbeispiels eines erfindungsgemäßen Galilei-Teleskops drei Linsen 21, 24, 27 mit den Linsenflächen 22, 23, 25, 26, 28, 29 (Flächennummern 1 bis 6). Von diesen drei Linsen 21, 24, 27 bestehen zwei Linsen aus Kunststoff, vorteilhaft die beiden Linsen 21 und 24. Das diffraktive optische Element 15 liegt auf der Rückseite der Frontlinse 21 auf der Linsenfläche 23 (Flächennummer 2). Das Okular 30 besteht aus einer Linse 31 mit den Linsenflächen 32 und 33 (Flächennummern 7 und 8).

Beispiel 2: Obiektabstand 251 mm

In diesem Beispiel wird eine Galilei-Lupenbrille mit einem Objektabstand von 251 mm zwischen Objekt und Frontlinse 21 angegeben. Tabelle 2 enthält eine Beschreibung des Ausführungsbeispiels für ein erfindungsgemäßes Galilei-Teleskop mit einem Objektabstand von 251 mm. Die Daten der Linsenflächen 22, 23, 25, 26 (Flächennummern 1 bis 4 in Tabelle 2), einschließlich des diffraktiven Elements 15, das sind insbesondere das diffraktive optische Element 15 sowie die Asphäre, haben die gleichen Daten, wie sie im Beispiel 1 für den Objektabstand 351 mm angegeben sind.

Tabelle 2

| Nr. | Radius [mm] | Dicke bzw. Luftabstand [mm] | Glas bzw. Medium | Freier Durchmesser [mm] |
|---|---|---|---|---|
| 0 | | 251.0 | Luft | |
| 1-4 | Siehe Tabelle 1 | | | |
| 5 | 182.790865 | 1.3 | Ohara SNPH2 | 24.5 |
| 6 | 58.854162 | 15.7 | Luft | 24.5 |
| 7 | -17.299091 | 0.8 | Schott NPK52A | 12.4 |
| 8 | 33.484685 | | Luft | 12.4 |

Beispiel 3: Objektabstand 501 mm

In diesem Beispiel wird eine Galilei-Lupenbrille mit einem Objektabstand von 501 mm zwischen Objekt und Frontlinse 21 angegeben. Tabelle 3 enthält eine Beschreibung des Ausführungsbeispiels für ein erfindungsgemäßes Galilei-Teleskop mit einem Objektabstand von 501 mm. Die Daten der Linsenflächen 22, 23, 25, 26 (Flächennummern 1 bis 4 in Tabelle 3), einschließlich des diffraktiven Elements 15, das sind insbesondere das diffraktive optische Element 15 sowie die Asphäre, haben die gleichen Daten, wie sie im Beispiel 1 für den Objektabstand 351 mm angegeben sind.

Tabelle 3

| Nr. | Radius [mm] | Dicke bzw. Luftabstand [mm] | Glas bzw. Medium | Freier Durchmesser [mm] |
|---|---|---|---|---|
| 0 | | 501.0 | Luft | |
| 1-4 | Siehe Tabelle 1 | | | |
| 5 | 395.884236 | 1.3 | Ohara SNPH2 | 24.5 |
| 6 | 73.933988 | 14.975 | Luft | 24.5 |
| 7 | -21.723776 | 0.8 | Schott NPK52A | 12.4 |
| 8 | 16.782086 | | Luft | 12.4 |

Ein weiterer Vorteil der erfindungsgemäßen Lupenbrille besteht darin, dass die beiden Kunststofflinsen für alle Arbeitsabstände gleich sind (siehe Tabelle 1 bis 3).

**Bezugszeichenliste**

10    Optische Einrichtung (Teleskop)
11    Optische Achse

15    Diffraktives Optisches Element

20    Objektivelement
21    Trägerlinsenelement für ein diffraktives optisches Element
22    Linsenfläche (Frontfläche)
23    Trägerfläche für das diffraktive optische Element
24    Objektiv-Linsenelement
25    Linsenfläche
26    Linsenfläche
27    Objektiv-Linsenelement
28    Linsenfläche
29    Linsenfläche

30    Okularelement
31    Okular-Linsenelement
32    Linsenfläche
33    Linsenfläche

d    Furchentiefe
h    Furchenbreite

**Patentansprüche**

1. Optische Einrichtung (10), insbesondere Teleskopeinrichtung, mit wenigstens einem Objektivelement (20), das zwei oder mehr Objektiv-Linsenelemente (21, 24, 27) aufweist, wobei eines der Objektiv-Linsenelemente (21) als Trägerlinsenelement für ein diffraktives optisches Element (15) ausgebildet ist, welches ein diffraktives optisches Element (15) aufweist, **dadurch gekennzeichnet, dass** die optische Einrichtung (10) als Galilei-System oder als Kepler-System ausgebildet ist, dass die optische Einrichtung (10) ein Okularelement (30) mit wenigstens einem Okular-Linsenelement (31) aufweist, dass das diffraktive optische Element (15) derart in der optischen Einrichtung (10) angeordnet oder ausgebildet ist, dass die Lichtstrahlen in einem Winkel von kleiner 20 Grad auf dieses einfallen und dass das diffraktive optische Element (15) eine minimale Furchenbreite h von größer 50 μm, insbesondere von größer 100 μm, aufweist.

2. Optische Einrichtung nach Anspruch 1, **dadurch gekennzeichnet, dass** das Objektivelement (20) drei Objektiv-Linsenelemente (21, 24, 27) aufweist.

3.  Optische Einrichtung nach Anspruch 1 oder 2, **dadurch gekennzeichnet, dass** wenigstens eine Linsenfläche wenigstens eines Objektiv-Linsenelements (21, 24, 27) als asphärische Fläche ausgebildet ist.

4.  Optische Einrichtung nach einem der Ansprüche 1 bis 3, **dadurch gekennzeichnet, dass** das als Trägerlinsenelement für das diffraktive optische Element (15) ausgebildete Objektiv-Linsenelement (21) und/oder wenigstens ein nicht als Trägerlinsenelement für das diffraktive optische Element ausgebildetes Objektiv-Linsenelement (24, 27) aus Kunststoff gebildet ist/sind.

5.  Optische Einrichtung nach einem der Ansprüche 1 bis 4, **dadurch gekennzeichnet, dass** das diffraktive optische Element (15) als Ringsystem auf der Trägerfläche (23) des Trägerlinsenelements (21) angeordnet oder ausgebildet ist.

6.  Optische Einrichtung nach einem der Ansprüche 1 bis 5, **dadurch gekennzeichnet, dass** das diffraktive optische Element (15) stufenförmig ausgebildet ist.

7.  Optische Einrichtung nach einem der Ansprüche 1 bis 6, **dadurch gekennzeichnet, dass** das diffraktive optische Element (15) auf einer Trägerfläche (23) des Trägerlinsenelements (21) angeordnet oder ausgebildet ist und dass die Trägerfläche (23) aus einer sphärischen Grundform besteht.

8.  Optische Einrichtung nach einem der Ansprüche 1 bis 7, **dadurch gekennzeichnet, dass** das diffraktive optische Element (15) im Innern des Objektivelements (20) angeordnet ist.

9.  Optische Einrichtung nach einem der Ansprüche 1 bis 8, **dadurch gekennzeichnet, dass** wenigstens ein Okular-Linsenelement (31) als Kittglied aus wenigstens zwei Linsenelementen gebildet ist.

10. Optische Einrichtung nach einem der Ansprüche 1 bis 9, **dadurch gekennzeichnet, dass** wenigstens ein Okular-Linsenelement (31) als Linsenelement mit veränderlicher Brennweite ausgebildet ist.

11. Optische Einrichtung nach einem der Ansprüche 1 bis 10, **dadurch gekennzeichnet, dass** diese als Lupeneinrichtung, oder Fernglaseinrichtung, oder Fernrohreinrichtung, oder Flüssiglinse mit einer torischen Fläche ausgebildet ist.

12. Verwendung einer optischen Einrichtung (10) nach einem der Ansprüche 1 bis 11 als Lupeneinrichtung, insbesondere in einer Lupenbrille, oder als Fernglaseinrichtung oder als Fernrohreinrichtung, oder als Flüssiglinse mit einer torischen Fläche.

**Fig.1**

**Fig.2**

Blaze-DOE          N=4, $\eta_{m=1}(\lambda_0) \approx 81\%$          N=8, $\eta_{m=1}(\lambda_0) \approx 95\%$

## Fig.3

## IN DER BESCHREIBUNG AUFGEFÜHRTE DOKUMENTE

**In der Beschreibung aufgeführte Patentdokumente**

- US 5463500 B
- US 5790323 A
- DE 102005036486 A1
- DE 29823076 U1
- US 5734502 A
- EP 0965864 A2